# EUROPEAN PATENT SPECIFICATION

(11) **EP 1 345 397 B1**
(45) Date of publication and mention of the grant of the patent: **21.06.2006**
(21) Application number: 02251836.9
(22) Date of filing: 14.03.2002
(51) Int. Cl.: H04M 3/436

(54) **Instant messaging for called party notification**
Sofortige Nachrichtenübermittlung für Benachrichtigung der angerufenen Teilnehmer
Messagerie instantanée pour notification de l'abonné appelé

(43) Date of publication of application: 17.09.2003
(73) Proprietor: Avaya UK, Farnsborough, Hampshire GU14 0NR (GB)
(72) Inventor: Didcock, Clifford Neil, Wantage, oxen 0x128lx (GB); Wilson, Michael Geoffrey Andrew, London E11 1JH (GB)
(74) Representative: Williams, David John

(56) References cited:
- WO-A-01/15423
- WO-A-01/72020
- US-A- 5 557 659
- LICCIARDI C A ET AL: "An architecture for IN-internet hybrid services" COMPUTER NETWORKS, ELSEVIER SCIENCE PUBLISHERS B.V., AMSTERDAM, NL, vol. 35, no. 5, April 2001 (2001-04), pages 537-549, XP004304865 ISSN: 1389-1286

## Description

### Field of the Invention

The present invention relates to a computer telephony integration (CTI) application server, and the notification to users of such a server of information concerning incoming telephone calls. The invention relates particularly, but not exclusively, to a unified messaging server.

### Background to the Invention

Unified messaging systems, which are one example of a CTI application, integrate several different communication media such that users are able to retrieve and send messages confirming various media using a single interface. Typically, a unified messaging system integrates voice messaging systems with e-mail systems. Interfaces to the system provide for, for example, telephones and personal computers. An example of a unified messaging system is disclosed in US Patent No 5,557,659.

A typical unified messaging system broadly provides an architecture in which at least one unified messaging voice server is provided as an interface, or voice gateway, between a PBX system and an e-mail system. A typical e-mail system includes at least one message store, a directory, at least one e-mail client, and a user administrator application.

To allow unified messaging systems to scale to support large deployments, a voice mail domain is created. The voice mail domain consists of one or more voice servers, which work together to exhibit the characteristics of a larger system. The voice mail servers preferably share unified messaging configuration data.

It has been a known feature of unified messaging systems to be able to provide subscribers of the unified messaging system with information concerning incoming telephone calls. In such a feature, a subscriber, typically accessing the unified messaging system using a computer, receives messages on the computer screen providing information about an incoming call to help in determining whether to accept or reject the call.

However, there is a problem with such a feature in that its implementation requires that subscribers register with all voice servers in a multi-voice server environment, or for a specific centralised notification server to be provided. A further problem is that dedicated software must be installed and running on all client systems.

Because of these drawbacks, this feature has to date had limited appeal in CTI systems such as unified messaging systems

Document XP004304865 discloses text-based protocol interactions in the context of a virtual presence service. Document WO 01/15423 discloses a method for providing unified multimedia communication services including real time and messaging services.

It is an aim of the present invention to provide an improved unified messaging system in which subscriber notification is simplified. In particular, the present invention seeks to facilitate the capability to provide subscriber notification without the need to create and distribute per client software, and thereby allow easy deployment.

### Summary of the Invention

According to the present invention there is provided a method according to claim 1.

The instant messaging session may identify to the subscriber a characteristic of the telephone call. The characteristic of the telephone call may include one of the originating telephone numbers, or the identity of the caller.

Prior to initiating the instant messaging session the voice server may establish that the subscriber is available for an instant messaging session.

The voice server may send a message to the subscriber requesting the subscriber to identify how the call is to be handled.

In response to the instant message the subscriber may send a response to indicate whether to: accept the call, reject the call, or transmit a text message to the caller. The voice server may convert any such text message to speech.

The subscriber may provide the voice server with rules for handling incoming calls for that subscriber. The rules may apply to all incoming calls. The rules may apply to selected incoming calls. The rules may apply to calls from selected callers. The rules may apply to calls in selected time periods

Further according to the present invention there is provided a computer telephony integration system according to claim 13.

In the computer telephony integration system the voice server is a unified messaging server.

There may further be provided a computer program product for storing computer program code for performing the defined method.

### Brief Description of the Figures

The invention will now be described by way of example with reference to the accompanying drawings, in which:
Figure 1 illustrates the architecture of a known unified messaging system;
Figure 2 illustrates the implementation of a unified messaging system according to the present invention;
Figure 3 illustrates the sequence of actions accompanying the unified messaging system's use of instant messaging to notify the subscriber of a call; and
Figure 4 illustrates the possible sequences of actions when the subscriber responds to a notification raised as in Figure 3.

### Description of the Preferred Embodiments

The invention is now described herein with reference to an implementation in an exemplary unified messaging system. The invention, however, is not limited in its applicability to such an exemplary system. As set out in the introduction, the invention is applicable to any computer telephony integration system.

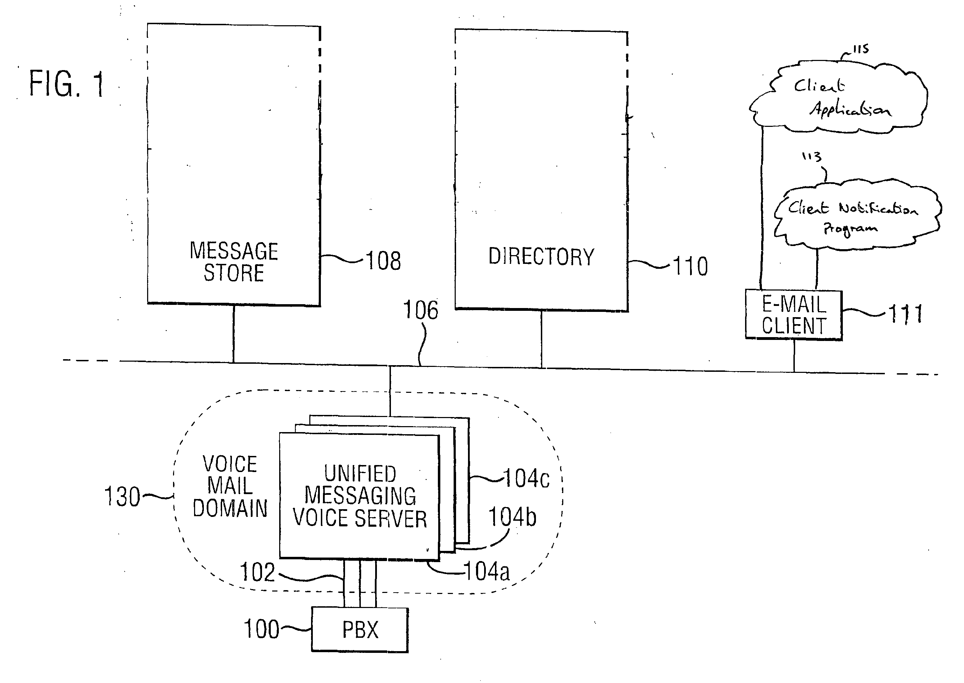

Referring to Figure 1, there is illustrated the architecture of a typical unified messaging system. The system comprises one or more message stores 108, a directory 110, and at least one unified messaging voice server 104. In the example of Figure 1, there is illustrated a set of three voice servers, 104a, 104b and 104c. It should be noted that the example of Figure 1 is for illustration purposes only, and a system may be provided with more or less than three voice servers. Together, the set of three voice servers define a voice mail domain 130. In addition, at least one e-mail client 11 is also inter-connected. In practice many e-mail clients, or subscribers, will be connected in the system. It should further be noted that e-mail clients are illustrated for example purposes only, and other types of client may be connected in the system.

The three unified messaging voice servers 104a to 104c are connected via connections 102 to a PBX 100. The interconnection of the various elements shown in Figure 1 is outside the scope of the present invention and is familiar to one skilled in the art. For ease of description herein, the various elements are shown as interconnected by a common network connection 106. However, in practice the various elements may not be connected on a common interface.

At least one message store 108, the directory 110, and at least one e-mail client 111 constitute the user e-mail system. It should be noted that the e-mail user system includes further elements, not shown in Figure 1 but familiar to one skilled in the art. The introduction of the unified messaging voice server 104, connected to the PBX 100, creates the unified messaging system. The unified messaging functionality introduced into the e-mail system integrates closely with the existing system structure. The unified messaging voice server 104 utilises the (e-mail) directory 110. The e-mail client 111 is typically a computer terminal.

The message store 108 stores messages (e-mail and voice) associated with system users, and the directory 110 stores descriptive attributes associated with those system users.

The unified messaging voice server 104 is a gateway (a voice portal) into and out of the existing e-mail system.

As discussed in the background to the invention, a known CTI server or unified messaging product-class feature is the proposed ability for unified messaging subscribers to receive a "screen-pop" type notification when a call is received for them. For this feature to operate, a specific unified messaging client notification program needs to exist and be registered and running on the subscriber's client computer. Figure 1 shows such a client notification program 113 associated with the e-mail client 111. It is not essential that there be a direct association of the client notification program with an e-mail client, though many instant messaging applications may be integrated with e-mail in some way.

The client notification program 113, when initiated, registers with all the unified messaging voice servers 104. As part of handling telephone calls for that subscriber or client, the unified messaging voice server communicates with a client application 115 running on the e-mail client, using a proprietary protocol, to convey caller information to the client. The caller information may, for example, be the caller's phone number or the reason for the call. The client application may then 'pop-up' a dialog box on the subscriber's computer informing the client of the call. The dialog box preferably invites the subscriber to accept the call, play a message for the caller, or reject the call, preferably with a default rejection after a timeout period. It should be noted that techniques other than a pop-up dialog box may be utilised, and such technique is described herein for example purposes only.

Such an application has not yet been implemented very successfully in a unified messaging system because of significant drawbacks associated with its implementation. One drawback is that the mechanism does not scale well for a multiserver voice domain as shown in Figure 1, as the subscriber must register with all of the voice servers 104. Alternatively, some form of centralised notification server would have to be provided, which presents additional complexity and a single point of failure.

Another drawback is that additional unified messaging software needs to be present and running on all subscriber's computers. This makes deployment and acceptance of the solution considerably more challenging.

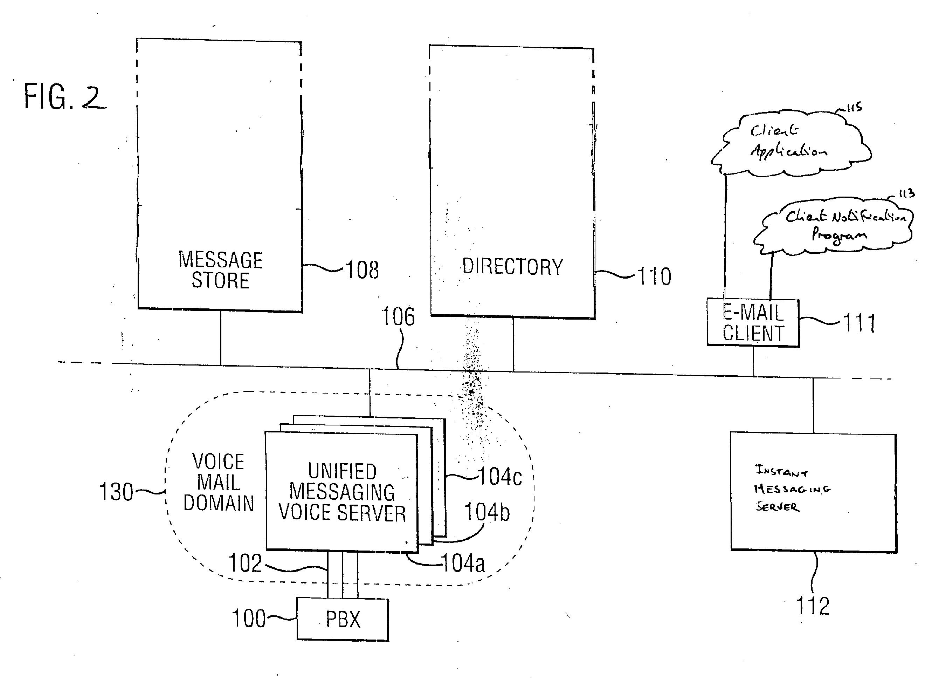

In accordance with the present invention, the exemplary unified messaging arrangement of Figure 1 is modified as shown in Figure 2. Like reference numerals are used in Figure 2 to identify elements corresponding to elements shown in Figure 1.

In accordance with the present invention an instant messaging service is introduced into the unified messaging network, as represented by the instant messaging server 112 in the example of Figure 2. As shown in Figure 2, the instant messaging server is introduced such that it is connected to the e-mail client 111 and the unified messaging voice servers 104, by connection on the line 106. The interconnection of the instant messaging server may be different in a practical application, but it is important that the instant messaging server communicates with the e-mail client 11 and the voice servers 104.

Ln practice the instant messaging server may already be provided via network connections, and certain clients, for example e-mail clients, may be registered with the instant messaging server to support known instant messaging applications.

In accordance with the present invention, each of the unified messaging voice servers 104 registers with the instant messaging server as an instant messaging client. Each of the subscribers 111 also register with the instant messaging server as an instant messaging client. It should be noted that in certain applications only selected clients, e.g. selected e-mail clients, may register with the instant messaging server. However all unified messaging voice server 104 must register to ensure that any client who chooses to register may utilise the present invention. When an e-mail client is involved in an instant messaging session, the IM server 112 acts as the IM client.

The type of instant messaging used is not important. It is merely required, for the invention to operate, that the subscriber and the voice servers register with the same type of instant messaging provider.

In accordance with the present invention, once registered the unified messaging voice servers may use instant messaging techniques to inform unified messaging subscribers of telephone calls. As such, standard communication mechanisms are used for this particular operation, thereby minimising the complexity of the implementation. As such the stated drawbacks of the previously known, but not widely implemented, solution are avoided.

Once the unified messaging voice servers and e-mail clients are registered with the instant messaging server, on receipt of a call the unified messaging voice server detects whether the e-mail client is on-line, in accordance with usual instant messaging techniques. If the client is on-line, the unified messaging voice server sends the call information to the subscriber in an IM (instant messaging) message. The subscriber's IM client then acts as the screen-pop' application, and the client can respond with a suitable message.

In an example scenario, one of the unified messaging voice servers 104 receives a telephone call originally destined for the e-mail client 111. On receipt of the telephone call, the unified messaging voice server retrieves the user configuration information for that client from the directory 110 in accordance with normal unified messaging techniques. The user configuration information contains information identifying that the user is configured with call-handling rules. Such rules, determined by the client, may be that all calls to that client should be handled by the unified messaging voice server; that calls should be handled by the unified messaging voice server after three rings; that calls should be handled by the unified messaging voice server if the client's phone is busy, etc.

In accordance with the present invention, one of the call handling/notification rules associated with the client identifies the client as an instant messaging user. The client may be identified as an instant messaging user at all times, or for certain time periods, or for telephone calls for certain people.

On determination of such information for a client, the unified messaging voice server acts as an instant messaging client and attempts to establish an instant messaging session with the subscriber. Assuming the client is available to the instant messaging service then the unified messaging service will use the instant messaging client application to initiate a chat with the subscriber.

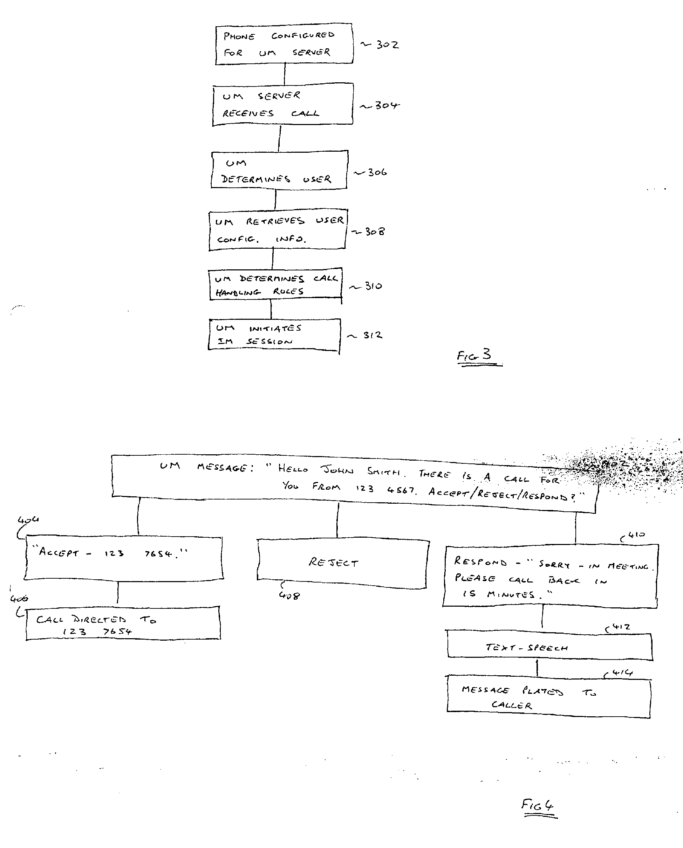

A specific example of the system of Figure 2 in use is now illustrated with reference to the flow chart of Figure 3.

In a first step, 302, a user is configured for unified messaging by registering with the unified messaging server. Any call to a user for which unified messaging is configured is first forwarded to the unified messaging server. As illustrated by step 304, the unified messaging server receives a call, and then in a step 306 determines the user associated with that call. The unified messaging server in a step 308 determines the user configuration information for that user, and consequently determines the call handling rules in step 310. Finally, in a step 312, the unified messaging server initiates an instant messaging session with the user.

A more specific example of the instant messaging exchange between the unified messaging server and the user is illustrated in Figure 4. In a step 402 the instant messaging session is initiated by the unified messaging server, which for example sends a message to the user John Smith: "Hello John Smith. There is a call for you from 123 4567. Accept/Reject/Respond?" If the incoming number is recognised by caller ID, then the message may display the name of the caller rather than the caller's number. The content of th e message is implementation dependent, and esily varied.

Responsive to the message, the user may take one of three actions. As a first action, the user may accept the call, in this example sending a message: "Accept - 123 7654", the user providing the unified messaging server the number of the telephone to which the call should be directed. Thereafter the unified messaging server, as illustrated by step 406, directs the call to number 123 7654.

As a possible second action, the user may reject the call in a step 308. The message may simply ne "Reject". In one example implementation, as a default action the call may automatically be rejected if the user does not respond to the message 402 within a certain time limit.

As a possible third action, the user may respond to the message from the unified messaging server, by providing a message to be relayed to the caller. For example, in step 410 the user may respond to the unified messaging server with "sorry - in meeting. Please call back in 15 minutes." in a step 412 the unified messaging server 412 converts this text to speech, and in a step 414 plays the speech message to the caller.

Although the invention has been described herein with reference to a particular implementation in a unified messaging system, the applicability of the invention is more general. The invention more generally applies to any CTI application.

The skilled person will readily identify other possible implementations of the present invention beyond those given herein. The scope of the present invention is defined by the appended claims, and the skilled person will understand that modifications and variations to the invention as descried herein are possible without departing from the scope of the invention as defined in the claims.

## Claims

1. A method of notifying a subscriber of a computer telephony integration system of a telephone call, the computer telephony integration system including a plurality of voice servers, the method comprising: a registration step for each of the plurality of voice servers, said registration step comprising each voice server initiating a registration with an instant messaging server; a registration step for the subscriber, said registration step comprising the subscriber initiating a registration with said instant messaging server; and the step of, on receipt of a telephone call for the subscriber at one voice server, the one voice server initiating an instant messaging session with the subscriber via the instant messaging server.

2. A method according to claim 1 wherein the instant messaging session identifies to the subscriber a characteristic of the telephone call.

3. A method according to claim 2 wherein the characteristic of the telephone call includes one of the originating telephone number, or the identity of the caller.

4. A method according to any one of claims 1 to 3 wherein prior to initiating the instant messaging session the voice server establishes that the subscriber is available for an instant messaging session.

5. A method according to any one of claims 1 to 4 wherein the voice server sends a message to the subscriber requesting the subscriber to identify how the call is to be handled.

6. A method according to claim 5 wherein in response to the message the subscriber sends a message to indicate whether to: accept the call, reject the call, or transmit a voice message to the caller.

7. A method according to claim 7 wherein the voice server converts any such voice message from text to speech.

8. A method according to any one of claims 1 to 7 wherein the subscriber provides the voice server with rules for handling incoming calls for that subscriber.

9. A method according to claim 8 wherein the rules apply to all incoming calls.

10. A method according to claim 8 wherein the rules apply to selected incoming calls.

11. A method according claim 10 wherein the rules apply to calls from selected callers.

12. A method according to claim 10 wherein the rules apply to calls in selected time periods.

13. A computer telephony integration system including a plurality of voice servers, an instant messaging server, and at least one subscriber, the system being arranged to register each voice server and the at least one subscriber with said instant messaging server, such that on receipt of a telephone call for the subscriber at a voice server the voice server being arranged to initiate an instant messaging session with the subscriber via the instant messaging server.

14. A computer telephony integration system according to claim 13 wherein the voce server is a unified messaging server.

15. A computer program product for storing computer program code for performing the method of any one of claims 1 to 12.

## Patentansprüche

1. Verfahren zum Benachrichtigen eines Teilnehmers eines Computer-Telefon-Integrationssystems über einen Telefonanruf, wobei das Computer-Telefon-Integrationssystem mehrere Sprach-Server enthält, und das Verfahren aufweist: einen Registrierungsschritt für jeden von der Vielzahl von Sprach-Servern, wobei der Registrierungsschritt beinhaltet, dass jeder Sprach-Server eine Registrierung mit einem Server für sofortige Nachrichtenübermittlung einleitet; einen Registrierungsschritt für den Teilnehmer, wobei der Registrierungsschritt beinhaltet, dass der Teilnehmer eine Registrierung mit dem Server für sofortige Nachrichtenübermittlung einleitet; und den Schritt, dass, nach dem Empfang eines Telefonanrufs für den Teilnehmer bei einem Sprach-Server, der eine Sprach-Server eine sofortige Nachrichtenübermittlungssitzung mit dem Teilnehmer über den Server für sofortige Nachrichtenübermittlung einleitet.

2. Verfahren nach Anspruch 1, wobei die sofortige Nachrichtenübermittlungssitzung für den Teilnehmer ein kennzeichnendes Merkmal des Telefonanrufs identifiziert.

3. Verfahren nach Anspruch 2, wobei das kennzeichnende Merkmal des Telefonanrufs eines von der Ursprungstelefonnummer oder der Identität des Anrufers beinhaltet.

4. Verfahren nach einem der Ansprüche 1 bis 3, wobei der Sprach-Server vor der Initialisierung der sofortigen Nachrichtenübermittlungssitzung feststellt, dass der Teilnehmer für eine sofortige Nachrichtenübermittlungssitzung verfügbar ist.

5. Verfahren nach einem der Ansprüche 1 bis 4, wobei der Sprach-Server eine Nachricht an den Teilnehmer sendet, die den Teilnehmer auffordert, anzugeben, wie der Anruf zu behandeln ist.

6. Verfahren nach Anspruch 5, wobei unter Ansprechen auf die Nachricht der Teilnehmer eine Nachricht sendet, um anzugeben, ob der Anruf anzunehmen, der Anruf zurückzuweisen oder eine Sprachnachricht an den Anrufer zu senden ist.

7. Verfahren nach Anspruch 6, wobei der Sprach-Server jede derartige Sprachnachricht aus Text in Sprache umwandelt.

8. Verfahren nach einem der Ansprüche 1 bis 7, wobei der Teilnehmer den Sprach-Server mit Regeln für die Behandlung ankommender Anrufe für diesen Teilnehmer versorgt.

9. Verfahren nach Anspruch 8, wobei die Regeln auf alle ankommenden Anrufe zutreffen.

10. Verfahren nach Anspruch 8, wobei die Regeln auf ausgewählte ankommende Anrufe zutreffen.

11. Verfahren nach Anspruch 10, wobei die Regeln auf Anrufe ausgewählter Anrufer zutreffen.

12. Verfahren nach Anspruch 10, wobei die Regeln auf Anrufe in ausgewählten Zeitperioden zutreffen.

13. Computer-Telefon-Integrationssystem mit mehreren Sprach-Servern, einem Server für sofortige Nachrichtenübermittlung, und wenigstens einem Teilnehmer, wobei das System dafür eingerichtet ist, jeden Sprach-Server und den wenigstens einen Teilnehmer mit dem Server für sofortige Nachrichtenübermittlung zu registrieren, so dass nach dem Empfang eines Telefonanrufs für den Teilnehmer bei einem Sprach-Server, der Sprach-Server so eingerichtet ist, dass er eine sofortige Nachrichtenübermittlungssitzung mit dem Teilnehmer über den Server für sofortige Nachrichtenübermittlung einleitet.

14. Computer-Telefon-Integrationssystem nach Anspruch 13, wobei der Sprach-Server ein UMS-Server (Unified Messaging Server) ist.

15. Computerprogrammprodukt zum Speichern von Computerprogrammcode zur Durchführung des Verfahrens nach einem der Ansprüche 1 bis 12.

## Revendications

1. Procédé de notification à un abonné d'un système d'intégration téléphonie-informatique d'un appel téléphonique, le système d'intégration téléphonie-informatique comportant une pluralité de serveurs vocaux, le procédé comprenant :
une étape d'enregistrement pour chacun de la pluralité de serveurs vocaux, l'étape d'enregistrement comprenant le déclenchement par chaque serveur vocal d'un enregistrement auprès d'un serveur de messagerie instantanée ; une étape d'enregistrement pour l'abonné, l'étape d'enregistrement comprenant le déclenchement par l'abonné d'un enregistrement auprès du serveur de messagerie instantanée ; et l'étape, lors de la réception d'un appel téléphonique destiné à l'abonné sur un serveur vocal, de déclenchement par un serveur vocal d'une session de messagerie instantanée avec l'abonné par l'intermédiaire du serveur de messagerie instantanée.

2. Procédé suivant la revendication 1, dans lequel la session de messagerie instantanée identifie pour l'abonné une caractéristique de l'appel téléphonique.

3. Procédé suivant la revendication 2, dans lequel la caractéristique de l'appel téléphonique comprend l'un du numéro du téléphone appelant ou de l'identité de l'appelant.

4. Procédé suivant l'une quelconque des revendications 1 à 3, dans lequel, avant de déclencher la session de messagerie instantanée, le serveur vocal établit que l'abonné est disponible pour une session de messagerie instantanée.

5. Procédé suivant l'une quelconque des revendications 1 à 4, dans lequel le serveur vocal envoie un message à l'abonné, demandant à l'abonné d'identifier la façon dont l'appel doit être géré.

6. Procédé suivant la revendication 5, dans lequel, en réponse au message, l'abonné envoie un message pour indiquer s'il est nécessaire : d'accepter l'appel, de rejeter l'appel ou de transmettre un message vocal à l'appelant.

7. Procédé suivant la revendication 6, dans lequel le serveur vocal convertit un message vocal quelconque de ce type de texte en parole.

8. Procédé suivant l'une quelconque des revendications 1 à 7, dans lequel l'abonné fournit au serveur vocal des règles de gestion d'appels entrants destinés à cet abonné.

9. Procédé suivant la revendication 8, dans lequel les règles s'appliquent à tous les appels entrants.

10. Procédé suivant la revendication 8, dans lequel les règles s'appliquent à des appels entrants sélectionnés.

11. Procédé suivant la revendication 10, dans lequel les règles s'appliquent à tous les appels provenant d'appelants sélectionnés.

12. Procédé suivant la revendication 10, dans lequel les règles s'appliquent à tous les appels au cours de périodes de temps sélectionnées.

13. Système d'intégration téléphonie-informatique comportant une pluralité de serveurs vocaux, un serveur de messagerie instantanée et au moins un abonné, le système étant conçu pour enregistrer chaque serveur vocal et l'au moins un abonné auprès du serveur de messagerie instantanée, de telle façon que lors de la réception d'un appel téléphonique destiné à l'abonné sur le serveur vocal, le serveur vocal est conçu pour déclencher une session de messagerie instantanée avec l'abonné par l'intermédiaire du serveur de messagerie instantanée.

14. Système d'intégration téléphonie-informatique suivant la revendication 13, dans lequel le serveur vocal est un serveur de messagerie unifié.

15. Produit à base de programme informatique pour mémoriser le code d'un programme informatique destiné à exécuter le procédé suivant l'une quelconque des revendications 1 à 12.
